# FASCICULE DE BREVET EUROPEEN

(11) **EP 1 393 036 B1**
(45) Date de publication et mention de la délivrance du brevet: **23.08.2017**
(21) Numéro de dépôt: 02748927.7
(22) Date de dépôt: 04.06.2002
(51) Int. Cl.: G01M 11/02

(54) **DISPOSITIF DE DETECTION AUTOMATIQUE DE CARACTERISTIQUES D'UN VERRE OPHTALMIQUE AVEC DISPOSITIF DE POSITIONNEMENT AUTOMATIQUE D'UN PION DE CENTRAGE ET D'ENTRAÎNEMENT**
VORRICHTUNG ZUR AUTOMATISCHEN FESTSTELLUNG DER CHARAKTERISTIKEN EINES OPHTHALMICHES GLASS MIT EINER AUTOMATISCHEN POSITIONIERUNGSVORRICHTUNG EINES ZENTRIER- UND ANTRIEBSTÜCKES
DEVICE FOR AUTOMATICALLY DETERMINING CHARACTERISTICS OF AN OPHTHALMIC LENS WITH DEVICE FOR AUTOMATICALLY POSITIONING A CENTRING AND DRIVING PIN

(30) Priorité: 05.06.2001 FR 0107311
(43) Date de publication de la demande: 03.03.2004
(73) Titulaire: ESSILOR INTERNATIONAL (Compagnie Générale d'Optique), 94220 Charenton-le-Pont (FR)
(72) Inventeur: LEVECQ, Xavier, F-91190 Gif sur Yvette (FR); DIVO, Fabien, F-95500 Gonesse (FR); GUILLERMIN, Laurent, F-75001 Paris (FR)
(74) Mandataire: Santarelli
(86) Numéro de dépôt international: PCT/FR2002/001883
(87) Numéro de publication internationale: WO 2002/099376

(56) Documents cités:
- FR-A- 2 481 452
- US-A- 4 180 325
- US-A- 4 601 575
- US-A- 6 088 379
- PATENT ABSTRACTS OF JAPAN vol. 2000, no. 03, 30 mars 2000 (2000-03-30) & JP 11 352016 A (SAN HIGHTECH KK), 24 décembre 1999 (1999-12-24)
- PATENT ABSTRACTS OF JAPAN vol. 1996, no. 06, 28 juin 1996 (1996-06-28) & JP 08 033993 A (SEIKO EPSON CORP), 6 février 1996 (1996-02-06)

## Description

L'invention concerne un dispositif permettant de détecter automatiquement diverses caractéristiques d'un verre ophtalmique, notamment de reconnaître le type de verre (à puissance constante ou progressif par exemple des verres unifocaux, multifocaux ou progressifs), mesurer sa puissance, son astigmatisme, son prisme et éventuellement la puissance en différentes zones et ensuite repérer les caractéristiques remarquables du verre ophtalmique en question comme par exemple la position du centre optique, celle de l'axe du cylindre, pour un verre non progressif ou la position d'un point caractéristique appelé "point de référence de prisme" ou encore l'axe dit "axe de l'horizontal", pour un verre progressif.

L'invention s'applique aussi au processus de mise en place d'un pion de centrage et d'entraînement, collé sur le verre, permettant de positionner correctement ledit verre ophtalmique dans une machine de meulage destinée à lui donner le contour voulu, adapté à la forme de la monture choisie.

L'invention trouve encore une application particulièrement avantageuse lorsque le dispositif en question est associé à une machine de détourage du verre conçue pour saisir le verre après identification de ses principales caractéristiques et l'amener automatiquement à un poste de meulage où son contour est modifié pour l'adapter à une forme de monture choisie en tenant compte également de données propres à l'utilisateur, telles que l'écart inter-pupillaire et la hauteur, mesurées sur le porteur.

Le détourage, typiquement par meulage, d'un verre ophtalmique nécessite la connaissance de plusieurs caractéristiques propres à ce verre. Par exemple, pour un verre non progressif, il est nécessaire de connaître la position du centre optique ainsi que l'axe du cylindre pour corriger efficacement l'astigmatisme. En effet, pour un verre ophtalmique non progressif, ledit centre optique doit correspondre, une fois que celui-ci est installé sur la monture, à la position de la pupille de l'oeil. Un décalage entraîne l'apparition d'un effet prismatique d'autant plus prononcé que le verre ophtalmique est puissant. L'axe du cylindre doit aussi correspondre avec l'axe du cylindre prescrit, afin de corriger efficacement l'astigmatisme. Pour des verres non progressifs, on utilise un appareil appelé frontofocomètre, permettant de déterminer ces deux caractéristiques. Un tel appareil est utilisé manuellement. L'opérateur déplace le verre de manière à trouver à la fois le centre optique et l'axe du cylindre et un système mécanique vient marquer le verre ophtalmique en trois points de marquage qui constitueront des références pour le positionnement du verre. Ces trois points de référence sont ensuite utilisés pour opérer un centrage manuel sur un autre appareil appelé centreur. Le verre est alors muni d'un pion de centrage et d'entraînement qui permet son positionnement sur la machine de détourage.

Pour un verre progressif, il est nécessaire de repérer d'autres caractéristiques telles que la position d'un point dit point de référence de prisme (PRP) ou d'un axe dit axe de l'horizontale. La connaissance de ces derniers étant indispensable à une bonne correction du porteur.

Le point de centrage du verre progressif qui est le point sur lequel doit être centrée la pupille est à une distance connue du PRP. La connaissance du PRP donne donc ce point. De plus l'axe de l'horizontale donne l'orientation suivant laquelle le verre doit être monté sur la monture pour une bonne correction. Les verres progressifs comportent toujours deux gravures, en relief ou diffusantes. Celles-ci étant peu visibles les verres ont souvent des marques imprimées qui sont effacées après montage. Ces gravures ou marques permettent de centrer le verre, le frontofocomètre n'étant pas utilisable pour le centrage de ce type de verre. Le segment défini par ces deux gravures donne l'axe de l'horizontale et le milieu du segment le PRP. Si le verre est marqué, l'axe de l'horizontale et le PRP sont donnés par ces marques. Un point donne le PRP et deux traits définissent l'axe de l'horizontale. Si le verre n'est pas marqué l'opérateur applique les marques sur les gravures pour mieux les visualiser.

Enfin, d'autres types de verres ophtalmiques nécessitent des opérations de centrage particulières. Notamment, pour les verres dits double foyer, le centrage s'effectue en utilisant le segment dudit verre.

Toutes ces opérations de centrage aboutissent généralement au positionnement manuel, sur le verre, d'un pion de centrage et d'entraînement qui permet ultérieurement de positionner correctement le verre dans la machine de détourage.

En résumé, pour pouvoir centrer tous les types de verre ophtalmiques connus, on doit utiliser généralement deux appareils (centreur et frontofocomètre). Ces opérations se font la plupart du temps manuellement et aboutissent à la mise en place d'un pion, cette opération se faisant également la plupart du temps manuellement, ce qui est une source d'imprécision. Des dispositifs similaires sont connus de US 3445665, de US 4601575, et de US 4281897. L'invention selon la revendication 1 permet de déterminer les caractéristiques d'un verre ophtalmique, de façon automatique, au moyen d'un seul dispositif, ainsi que sa puissance, en un ou plusieurs points de sa surface. Avantageusement, ce dispositif permet aussi de reconnaître le type de verre (unifocal, multifocal, progressif, droit ou gauche). L'opérateur peut donc être informé d'un mauvais choix du verre (ne correspondant pas à la prescription avant le détourage de celui-ci). Cette reconnaissance des caractéristiques optiques se fait de façon automatique et sans avoir à déplacer le verre.

Plus précisément, l'invention concerne un dispositif de détection automatique de caractéristiques d'un verre ophtalmique, comportant un support conformé pour recevoir un tel verre et, de part et d'autre de ce support, d'une part des moyens d'éclairement incluant un système optique pour élaborer un faisceau lumineux dirigé vers un verre installé sur ledit support et, d'autre part, des moyens d'analyse de l'image transmise par ledit verre installé sur ledit support, caractérisé en ce que ledit système optique est agencé pour définir deux trajets optiques possibles, commutables, pour ledit faisceau lumineux et en ce qu'un masque formant une matrice de Hartmann ou analogue est placé sur l'un seulement des trajets, en un emplacement tel qu'il occupe une position prédéterminée par rapport à un axe optique desdits moyens d'analyse.

Le dispositif est en outre remarquable en ce que les deux trajets optiques comportent une partie commune en amont du support pour que le verre soit éclairé, soit par un faisceau parallèle complet intéressant toute sa surface soit par un faisceau de rayons parallèles individualisés fournis par le masque formant la matrice de Hartmann. On rappelle qu'une matrice de Hartmann est une sorte d'écran percé de trous selon une configuration géométrique prédéterminée, ou une grille ou moyen analogue.

Les moyens d'éclairement comportent au moins deux sources lumineuses commutables correspondant respectivement aux deux trajets optiques précités. Une première source lumineuse est une source dite ponctuelle associée à au moins une lentille de collimation propre à en fournir un faisceau parallèle complet illuminant ledit masque. En outre, une seconde source lumineuse est agencée pour éclairer le verre installé sur le support via une partie dudit système optique excluant ledit masque. Par exemple, la seconde source lumineuse peut être associée à un miroir semi-réfléchissant matérialisant l'intersection des deux trajets optiques précités. La partie commune précitée, en amont dudit support s'étend entre le miroir et ledit support. Le miroir est intercalé entre le masque et le support. La seconde source lumineuse est une source dite ponctuelle associée à au moins une lentille de collimation propre à en fournir un faisceau parallèle complet dirigé sur le miroir, qui renvoie ce faisceau vers le support où se trouve placé le verre ophtalmique. Typiquement, si les deux faisceaux parallèles engendrés à partir desdites première et seconde sources lumineuses sont perpendiculaires entre eux, le miroir fait un angle de 45° par rapport à l'axe optique du faisceau de la première source lumineuse, qui est aussi l'axe optique desdits moyens d'analyse.

Comme on le verra plus loin, la seconde source lumineuse est notamment adaptée pour la visualisation de marquages ou de gravures en relief. Cependant, pour des verres minéraux, les gravures sont diffusantes. Dans ce cas, la seconde source lumineuse est remplacée par au moins une troisième source lumineuse agencée à la périphérie du support pour éclairer en lumière rasante un verre placé sur ce support.

Les moyens d'analyse précités comportent un écran translucide dépoli intercalé perpendiculairement audit axe optique, entre ledit support et un récepteur optique. Ce dernier peut être constitué par un capteur matriciel associé à un groupe de lentilles adapté, du type télécentrique ou bien par une caméra dont l'objectif remplace ledit groupe de lentilles.

L'invention sera mieux comprise à la lumière de la description qui va suivre d'un dispositif de détection automatique des caractéristiques d'un verre ophtalmique, donnée uniquement à titre d'exemple et faite en référence aux dessins annexés dans lesquels :
- La figure 1 est un schéma de principe du dispositif en question.
- La figure 2 est un schéma illustrant les moyens nécessaires à la détermination du point de préhension du verre ; et
- La figure 3 est un schéma de principe d'un dispositif de positionnement automatique d'un pion de centrage et d'entraînement sur le verre.

Le dispositif de détection automatique 104 de caractéristiques d'un verre ophtalmique 102 comporte un support 103, ici horizontal et constitué par une plaque de verre transparente munie de saillies 106 formant au moins un trépied, pour maintenir un tel verre et, de part et d'autre de ce support : d'une part des moyens d'éclairement 108 incluant un système optique pour élaborer un faisceau lumineux dirigé vers le verre installé sur le support et, d'autre part, des moyens d'analyse 110 de l'image transmise par le verre installé sur le support.

Le système optique 111 est agencé pour définir deux trajets optiques possibles 112, 113, commutables, pour ledit faisceau lumineux. Dans l'exemple représenté, les moyens d'éclairement comportent au moins deux sources lumineuses S1, S2 commutables, correspondant respectivement aux deux trajets optiques précités. Autrement dit, lorsque la source S1 est allumée, la source S2 est éteinte et réciproquement. Les deux trajets optiques 112, 113 comportent une partie commune 115 en amont dudit support, plus particulièrement déterminée entre un miroir semi-réfléchissant 118 et le support 103. Ce miroir matérialise l'intersection des deux trajets optiques. Le miroir peut être remplacé par un cube séparateur ou un miroir amovible.

Selon une caractéristique importante de l'invention, un masque 120 formant une matrice de Hartmann ou analogue est placé sur l'un seulement des trajets (le trajet 112), en un emplacement tel qu'il occupe une position prédéterminée par rapport à un axe optique 125 desdits moyens d'analyse 110. Cet axe optique 125 est en fait l'axe commun de certaines lentilles du système optique centrées par rapport à la source S1 et d'un récepteur optique 128 faisant partie des moyens d'analyse 110 situés de l'autre côté du support 103. Les moyens d'analyse comportent aussi un écran translucide 129 dépoli, intercalé perpendiculairement à cet axe optique 125 entre le support 103 et ledit récepteur optique 128. Ce dernier peut être un capteur matriciel ou une caméra avec objectif. Si le récepteur optique est un capteur matriciel, on lui adjoint un système de deux lentilles 130, 131 et un diaphragme 132 (système télécentrique). Si le récepteur optique est une caméra, ces éléments sont remplacés par l'objectif même de la caméra. L'écran translucide 129 dépoli est de préférence un verre ou analogue, dépoli en surface. Il s'agit d'un disque monté tournant et entraîné en rotation par un moteur 135 autour d'un axe parallèle 136 à l'axe optique 125 et espacé de celui-ci.

Revenant au système optique 111 lié aux sources S1 et S2, la première source lumineuse S1 parmi ces deux sources est une source dite ponctuelle associée à au moins une lentille de collimation 139 propre à en fournir un faisceau parallèle complet illuminant le masque 120. La source S1 est utilisée pour établir une sorte de cartographie du verre (mesure de puissance/astigmatisme en plusieurs points du verre), la détermination du centre optique des verres non progressifs, et pour repositionner sur la face avant du verre les objets (gravure, marquage, segment) vus avec S2. S1 peut éventuellement être mobile suivant l'axe optique ou un axe perpendiculaire à celui-ci. La lentille de collimation 139 est centrée sur l'axe optique précité. Le système optique comporte en outre un expanseur constitué de deux lentilles 140, 141 également centrées sur l'axe optique précité et placées entre le miroir et le support. Cet expanseur permet de générer un faisceau de lumière parallèle de plus grande dimension, supérieure à celle du verre et d'imager le masque 120 sur la surface du verre ophtalmique.

Une seconde source lumineuse S2 est agencée pour éclairer le verre 102 installé sur le support 103 via une partie du système optique, excluant le masque 120 formant matrice de Hartmann. Cette seconde source lumineuse est associée au miroir semi-réfléchissant 118 qui matérialise l'intersection des deux trajets optiques 111, 112. Cette source S2 est une source ponctuelle associée à au moins une lentille de collimation propre à en fournir un faisceau parallèle complet dirigé vers le miroir 118. Le faisceau engendré par la lentille S2 est perpendiculaire au faisceau engendré par la lentille S1 et le miroir fait un angle de 45° par rapport à l'axe optique 125 de sorte que le faisceau parallèle complet issu de la source S2 est réfléchi sur ce miroir et dirigé vers le support 103 du verre ophtalmique. En revanche, en aval du masque 120, la lumière émise par la source S2 se divise en rayons lumineux distincts parallèles entre eux à la sortie de l'expanseur 140,141.

Comme on le verra plus loin, la source S2 est principalement utilisée pour la détermination de marques imprimées, de gravures en relief et de segments (verres bifocaux et trifocaux). En revanche, un verre ophtalmique minéral comporte des gravures diffusantes. Dans ce cas, il est nécessaire pour certaines opérations d'éclairer le verre 102 en lumière rasante. C'est pourquoi le dispositif comporte au moins une troisième source lumineuse et, dans l'exemple plusieurs sources S31, S3n réparties circulairement, à la périphérie du support 103, pour éclairer en lumière rasante, un tel verre placé sur ledit support. Dans ce cas il ne faut pas que les rayons lumineux soient diffusés par le dépoli, il faut donc prévoir soit un verre dépoli escamotable soit un verre présentant une zone polie utilisée uniquement dans ce cas.

Les sources lumineuses mentionnées S1, S2, ci-dessus peuvent être des diodes électroluminescentes (LED) ou des diodes laser de préférence associées à des fibres optiques respectives. Les sources S31, S3n seront de préférence des diodes électroluminescentes.

On va maintenant décrire la façon dont le dispositif peut être exploité pour déterminer un certain nombre de caractéristiques du verre ophtalmique placé sur le support.

### 1°/ Identification du verre ophtalmique

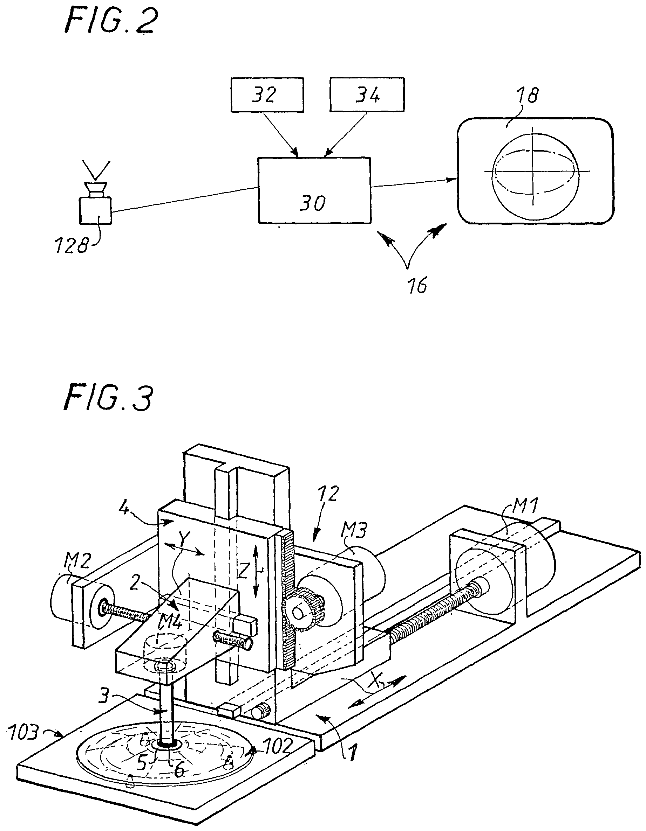

Il est utile de pouvoir reconnaître, avant toute autre chose, le type de verre ophtalmique analysé (monofocal, multifocal ou progressif) afin d'éviter les erreurs. Pour ce faire, on utilise la source S1 en liaison avec le masque formant matrice de Hartmann. Le faisceau parallèle complet est transformé par le masque 120 en une pluralité de rayons fins individualisés correspondant à la configuration du masque. Chacun de ces rayons frappe la face d'entrée (face avant du verre) parallèlement à l'axe optique. Ces rayons sont déviés par le verre et sont visualisés sous forme de tâches lumineuses sur l'écran dépoli tournant 129. Le dépoli est imagé sur le capteur matriciel associé au système télécentrique ou celui de la caméra, et les tâches sont analysées par un système électronique et informatique de traitement 16 (figure 2) qui détermine leur déplacement.

Si le verre est du type unifocal, le déplacement des points du masque (c'est à dire les tâches lumineuses qui apparaissent sur l'écran dépoli) après déviation par le verre est en progression linéaire du centre vers la périphérie, comparé aux positions des mêmes points lorsque le support ne porte aucun verre ophtalmique. Les positions des points du masque de Hartmann sur l'écran lorsque le support ne porte aucun verre sont mesurées au cours d'une phase d'étalonnage. Par conséquent, la mesure d'un déplacement de ce genre permet de déterminer le type de verre. Par exemple, pour un verre convergent, les tâches se rapprochent de l'axe optique, d'autant plus que le verre est puissant.

### 2°/ Détermination de la ligne de progression d'un verre progressif

Dans les conditions de mesure indiquée ci-dessus, on observe que pour un verre progressif, le déplacement des points varie suivant une ligne dite "ligne de progression". Pour déterminer cette ligne de progression, on détermine par calcul la direction du gradient de puissance en calculant la puissance en différents points du verre, par exemple selon la méthode qui sera indiquée plus loin. Cette direction est la ligne de progression. On peut donc mesurer et calculer de ce fait l'orientation de la ligne de progression qui est une des caractéristiques importantes d'un verre progressif. Il est à noter que ces calculs sont menés à partir de deux séries de données, d'une part la configuration des points du masque de Hartmann sur l'écran dépoli lorsque aucun verre ophtalmique n'est présent sur le support et d'autre part la configuration correspondante des mêmes points lorsqu'elle résulte d'une déviation de l'ensemble des rayons par le verre ophtalmique.

### 3°/ Détermination du centre optique pour un verre non progressif

Si le verre ophtalmique 102 a été identifié comme étant du type unifocal on peut facilement déterminer la position du centre optique de ce verre en comparant les points du masque de référence (apparaissant sur l'écran dépoli 129 lorsqu'aucun verre n'est positionné sur le support) et les points correspondants du masque visualisés sur l'écran dépoli après déviation par le verre. En principe, le point du masque qui n'a pas été dévié correspond à la position du centre optique. Comme il n'existe pas généralement de rayon n'ayant subi aucune déviation, on procède en fait à une interpolation à partir des rayons les moins déviés, par exemple par application de la méthode des moindres carrés.

### 4°/ Calcul de la puissance et de l'astigmatisme du verre

On sait que pour un verre unifocal, la distance entre le foyer et la face arrière du verre représente la puissance.

La position de la face arrière du verre est donnée avec une bonne approximation par la position du support puisque le verre est posé sur celui-ci. Pour déterminer le foyer, on utilise encore l'image sur l'écran dépoli du masque formant matrice de Hartmann. Pour ce faire, on compare la position des points correspondants entre l'image d'étalonnage (prise avant positionnement du verre) et l'image après interposition du verre. On compare pour plusieurs points voisins la position et la direction des rayons lumineux, ce qui permet de calculer la position du foyer sur l'axe optique (et donc sa puissance, qui est l'inverse de la distance du foyer au verre) et l'astigmatisme du verre (valeur et axe d'astigmatisme) s'il y a astigmatisme. Ces mesures sont locales et peuvent être répétées sur différentes zones du verre, ce qui permet d'obtenir une carte de puissance du verre.

### 5°/ Détermination du point de référence du prisme et de l'axe de l'horizontale pour un verre progressif

On sait que l'on peut considérer qu'en tout point du verre ophtalmique, la face avant et la face arrière font un angle assimilable à un prisme. Par ailleurs, dans un verre progressif, on définit l'addition comme étant la différence entre la puissance maximum et la puissance minimum du verre. Par convention, on définit le point de référence du prisme comme le point où le prisme du verre vaut les deux tiers de l'addition.

Sur un verre progressif, le point de référence de prisme (PRP) est le centre d'un segment séparant deux repères gravés sur le verre. Le plus souvent, ce point est également repéré par un marquage spécifique imprimé. Le repérage du PRP se fait en illuminant le verre à partir de la source lumineuse S2, c'est à dire en évitant le masque de Hartmann 120. L'image transmise par le verre ophtalmique apparaît sur le verre dépoli 129, elle est perçue par le récepteur optique 128. La lecture s'accompagne d'un traitement d'image approprié pour mieux discerner les repères gravés ou les marquages. Cette visualisation des repères gravés ou marquages et la détermination du PRP permet ensuite de déterminer le point de centrage du verre progressif (analogue au centre optique) sur lequel on doit faire coïncider la position du centre de la pupille, de l'oeil du porteur et l'axe d'horizontale qui donne l'orientation du verre dans la monture.

### 6°/ Détermination de la forme et des dimensions du verre

Ces caractéristiques se déterminent en illuminant le verre ophtalmique à partir de la source S2 et en effectuant un traitement d'image approprié afin de mieux discerner les contours du verre. Avant détourage, le verre est généralement circulaire et cette analyse a principalement pour but de déterminer son diamètre. Cependant, il peut arriver que le verre ait déjà une forme proche de celle de la monture à laquelle il est destiné. Le traitement d'image permet de connaître la forme et les dimensions du verre non circulaire. La détermination de la forme et des dimensions du verre permet de vérifier que celui-ci est suffisamment grand pour tenir dans la monture.

### 7°/ Détermination de la position du segment dans le cas d'un verre à double foyer

On utilise encore la source S2 qui permet de visualiser le verre ophtalmique sur l'écran dépoli. Un traitement d'images approprié permet de mieux observer les variations d'intensité lumineuses sur l'écran et par conséquent d'obtenir un contour net des limites du segment, et déterminer sa position avec précision.

Il est à noter que pour tous les paramètres indiqués ci-dessus qui sont acquis à partir de l'illumination du verre ophtalmique par la source S2, c'est à dire en excluant le masque de Hartmann, il est possible de retraiter les mesures pour "reporter" les positions des marques, gravures ou segment lues sur l'écran dépoli, au niveau de la face avant du verre ophtalmique. La source S2 permet de voir les marques, gravures ou segment mais ne permet pas de déterminer leurs positions sur la face avant du verre. La source S1 permet par contre de calculer la position précise de ces éléments acquis avec S2 sur la face avant du verre. On procède de la façon suivante. Supposons que l'on considère la tache lumineuse A, sur l'écran dépoli 129, correspondant à l'un des trous du masque de Hartmann. Le rayon lumineux correspondant frappe la face avant du verre 102 en A'. Dans une première étape, on allume la source S2 et on mémorise l'image correspondante qui apparaît sur l'écran dépoli. Puis, on allume la source S1 et on éteint la source S2. L'image du masque de Hartmann apparaît donc sur l'écran dépoli 129. Par construction, on connaît la hauteur de chaque trou du masque de Hartmann (distance du trou par rapport à l'axe optique 125). Par conséquent, pour un rayon donné et étant donné que les caractéristiques de l'expanseur 140, 141 sont bien connues, on connaît la hauteur du rayon correspondant à son point d'entrée sur la face avant du verre ophtalmique 102. C'est à dire qu'on connaît la hauteur du point A' correspondant au point A. Par conséquent, on peut affecter au point A une correction qui permet de déterminer A'. On peut donc retrouver la position sur le verre même, de tout repère lu sur l'écran dépoli, ce qui augmente la précision de cette mesure. Autrement dit, l'utilisation d'un masque de Hartmann en liaison avec une source lumineuse S1 (ledit masque de Hartmann étant placé en amont du verre ophtalmique) permet d'améliorer toutes les mesures qui sont effectuées en illuminant le verre à partir d'une source S2 empruntant un trajet optique excluant ledit masque.

Comme mentionné précédemment, les mesures normalement effectuées par utilisation de la source S2 peuvent être réalisées dans de meilleures conditions, lorsque le verre ophtalmique est un verre minéral, en remplaçant la source S2 par une ou plusieurs sources éclairant la face avant du verre ophtalmique en lumière rasante.

A titre d'application, on va maintenant décrire en référence aux figures 2 et 3 un dispositif de positionnement automatique d'un pion de centrage et d'entraînement sur le verre ophtalmique, ledit pion permettant de définir un référentiel d'usinage nécessaire au détourage des bords du verre pour donner à ce dernier une forme correspondant à la monture choisie.

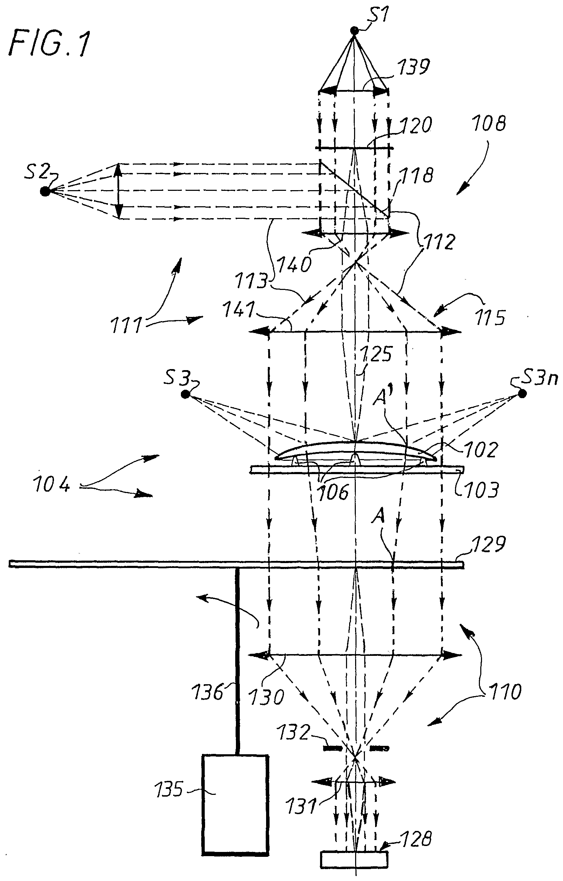

Le détecteur optique ou la caméra 128 analyse l'image du verre qui se forme sur l'écran dépoli 129. Les informations élaborées par le capteur matriciel ou la caméra sont adressées à des moyens de calcul et de visualisation 16. Ces informations sont traitées par un système électronique et informatique 30 qui reçoit également des informations représentatives des paramètres propres à la morphologie du porteur, notamment l'écart inter pupillaire et la hauteur de la pupille par rapport à l'axe de l'horizontale. Ces éléments sont mesurés par l'opticien sur le porteur et introduits dans le système par l'intermédiaire d'un dispositif de transmission 32. D'autre part, des informations représentatives du contour de la monture choisie sont également adressées au système électronique et informatique 30. Ces informations sont par exemple conservées dans une mémoire 34 et sélectionnées par l'opticien. Le système électronique et informatique 30 élabore une image vidéo qui est visualisée sur l'écran 18 d'un moniteur de télévision. Par conséquent, sur cet écran, on verra notamment, à la même échelle le contour de la monture et celui du verre non détouré, avec ses caractéristiques particulières, notamment les points de repérage qui y sont portés ou ceux qui ont été déterminés par la mise en oeuvre du dispositif de la figure 1. La prise en compte de tous ces éléments, mesurés, calculés ou lus permet de déterminer la position du périmètre du verre détouré par rapport au verre ophtalmique initial et, de ce fait, la position du point de préhension du verre, en vue du détourage, qui est généralement le centre du rectangle dans lequel s'inscrit le contour d'un cadre ou "cercle" de la monture.

L'invention concerne par conséquent aussi un dispositif de positionnement automatique d'un pion de centrage et d'entraînement sur un verre ophtalmique, caractérisé en ce qu'il comporte un dispositif de détection selon la description qui précède. Ce dispositif est donc caractérisé en ce qu'il comporte un mécanisme de positionnement 12, commandé, comportant un bras de positionnement 2 d'un pion de centrage 6, ce bras de positionnement étant apte à s'engager dans un espace laissé libre au-dessus du support 103, c'est-à-dire plus particulièrement entre le verre ophtalmique 102 et la lentille 141. Ce mécanisme permet de fixer sur le verre le pion de centrage et d'entraînement 6 qui servira de référence lorsque le verre sera installé dans la machine de détourage. Ce pion doit être placé en un point précis du verre qui correspond au centre du rectangle dans lequel s'inscrit le contour du cadre ou "cercle" de la monture choisie. Le montage du verre s'effectuant suivant une orientation prédéterminée, le pion détermine à la fois la position de ce point et l'orientation du verre à détourer par rapport au système de meulage.

La position et l'orientation du pion de centrage 6 sur le verre sont déterminées à partir de la connaissance du centre optique ou du point de centrage (pour les verres progressifs), de l'axe d'astigmatisme ou de l'axe d'horizontale (pour les verres progressifs) et des paramètres représentatifs de la morphologie du porteur (distance inter-pupillaire, hauteur de la pupille par rapport à la monture, axe d'astigmatisme du porteur). La connaissance du centre optique ou du point de centrage, de l'axe d'astigmatisme et de l'axe d'horizontale résulte de la mise en oeuvre du dispositif de mesure décrit à la figure 1. Les paramètres représentatifs du porteur sont introduits par l'intermédiaire du système décrit à la figure 2.

Le mécanisme de positionnement permet, à partir de la connaissance de tous ces paramètres, de bien positionner le pion sur le verre. Par conséquent, le mécanisme comporte trois degrés de liberté, deux axes de translation X et Y (figure 3) pour positionner le pion par rapport au point de centrage, ainsi qu'un axe de rotation (arbre 3) pour respecter l'orientation correcte du pion par rapport au verre.

Un axe supplémentaire en translation Z, permet, une fois le pion 6 bien positionné et bien orienté, de le poser sur le verre ophtalmique 102. Pour ce faire, le pion peut comporter un bloc de matière adhésive 5. Les axes X, Y et Z sont orthogonaux.

Le fonctionnement du système est le suivant.

L'opérateur place un pion de centrage 6 sur l'arbre 3 porté par le bras de positionnement 2 dudit pion. Le bloc de matière adhésive 5, est posé sur le pion pour que celui-ci adhère au verre une fois que ledit bloc est mis en contact avec ledit verre. La détermination des caractéristiques du verre ophtalmique 102 s'effectue comme indiqué ci-dessus, afin de déterminer les caractéristiques du verre nécessaires au centrage.

Le pion de centrage possède une référence qui permet de le positionner sur l'arbre 3 avec une orientation connue. Le bras de positionnement 2 du pion est solidaire d'un bâti mobile comprenant un socle 1 déplaçable selon une direction X grâce à un moteur M1 et un bloc intermédiaire 4 déplaçable selon une direction Z grâce à un moteur M3. Le bloc 4 se déplace le long d'une partie verticale du socle 1. Le bras de positionnement 2 se déplace le long du bloc 4 selon une direction Y grâce à un moteur M2. Comme indiqué précédemment, l'arbre 3 porté par le bras de positionnement 2 est commandé en rotation par un moteur M4 porté par le bras 2 pour pouvoir orienter correctement le pion 6 par rapport au verre ophtalmique 102.

Pendant les opérations d'analyse du verre 102, le dispositif de positionnement est débrayé, c'est-à-dire que le support 1 se déplaçant selon l'axe X est reculé au maximum pour éviter que le bras de positionnement 2 n'interfère avec le système de mesure.

Lorsque le verre a été analysé et que les données représentatives du porteur ont été prises en compte, on sait comment positionner le pion sur le verre. Le plateau 1 se déplace alors vers le verre suivant l'axe X et s'arrête lorsque le positionnement du pion de centrage suivant l'axe X est correct. Le bras de positionnement 2 est ensuite déplacé suivant le même principe pour positionner le pion correctement suivant l'axe Y. Le moteur M2 permet d'effectuer ce déplacement. L'arbre 3 effectue une rotation afin d'orienter correctement le pion par rapport au verre. Enfin, le bloc 4 est déplacé suivant l'axe Z par le moteur M3, par exemple par l'intermédiaire d'un système à crémaillère. Cette translation permet de positionner le pion sur le verre.

Lorsque le bras de positionnement 2 remonte dans la direction de l'axe Z, grâce à l'action du moteur M3, par l'intermédiaire d'une crémaillère, le pion se trouve posé au bon endroit sur le verre. Le support 4 remonte ensuite mais le pion 6 reste solidaire du verre grâce à l'adhésif 5 qu'il comporte. L'utilisateur n'a plus qu'à retirer le verre du support 103 pour le positionner dans le système de meulage.

Après dégagement du mécanisme de positionnement, le système se remet en position débrayée, éloignée du trajet optique du dispositif de détection automatique.

## Revendications

1. Dispositif de détection automatique de caractéristiques d'un verre ophtalmique, comportant un support (103) conformé pour recevoir un tel verre et, de part et d'autre de ce support, d'une part des moyens d'éclairement (108) incluant un système optique pour élaborer un faisceau lumineux dirigé vers un verre installé sur ledit support et, d'autre part, des moyens d'analyse (110) de l'image transmise par ledit verre installé sur ledit support, **caractérisé en ce que** ledit système optique est agencé pour définir deux trajets optiques possibles (112, 113), commutables, dirigés vers le verre pour ledit faisceau lumineux et **en ce qu'**un masque (120) formant une matrice de Hartmann est placé sur l'un seulement des trajets, en un emplacement tel qu'il occupe une position prédéterminée par rapport à un axe optique (125) desdits moyens d'analyse.

2. Dispositif selon la revendication 1, **caractérisé en ce que** les deux trajets optiques (112, 113) comportent une partie commune en amont dudit support.

3. Dispositif selon la revendication 1 ou 2, **caractérisé en ce que** lesdits moyens d'éclairement comportent au moins deux sources lumineuses (S1, S2) commutables correspondant respectivement aux deux trajets optiques précités.

4. Dispositif selon la revendication 3, **caractérisé en ce qu'**une première source lumineuse (S1) parmi lesdites deux sources est une source dite ponctuelle associée à au moins une lentille propre à en fournir un faisceau parallèle illuminant ledit masque.

5. Dispositif selon la revendication 3 ou 4, **caractérisé en ce qu'**une seconde source lumineuse (S2) parmi lesdites deux sources est agencée pour éclairer ledit verre installé sur ledit support via une partie dudit système optique excluant ledit masque.

6. Dispositif selon l'une des revendications 2 à 4, **caractérisé en ce que** ladite seconde source lumineuse (S2) est associée à un miroir semi-réfléchissant (118) matérialisant l'intersection des deux trajets optiques précités, ledit miroir étant intercalé entre ledit masque et ledit support.

7. Dispositif selon la revendication 5 ou 6, **caractérisé en ce que** ladite seconde source (S2) est une source dite ponctuelle associée à au moins une lentille propre à en fournir un faisceau parallèle dirigé vers ledit miroir (118).

8. Dispositif selon l'une des revendications 6 ou 7, **caractérisé en ce qu'**un expanseur (140,141) est intercalé entre ledit miroir et ledit support.

9. Dispositif selon l'une des revendications 3 à 8, **caractérisé en ce qu'**il comporte au moins une troisième source lumineuse (S31, S3n) agencée à la périphérie dudit support (103) pour éclairer en lumière rasante un verre placé sur ledit support.

10. Dispositif selon l'une des revendications précédentes, **caractérisé en ce que** lesdits moyens d'analyse comportent un écran translucide dépoli (129) intercalé perpendiculairement audit axe optique entre ledit support (103) et un récepteur optique (128).

11. Dispositif selon la revendication 10, **caractérisé en ce que** ledit écran translucide dépoli (129) est monté tournant et entraîné en rotation autour d'un axe parallèle audit axe optique et espacé de celui-ci.

12. Dispositif selon la revendication 10, **caractérisé en ce que** ledit récepteur optique (128) est un capteur matriciel ou une caméra.

13. Dispositif selon l'une des revendications précédentes, **caractérisé en ce que** ledit masque (120) est placé en amont dudit support (103), en considérant le sens du trajet du faisceau lumineux.

14. Dispositif de positionnement automatique d'un pion de centrage et d'entraînement (6) sur un verre ophtalmique, **caractérisé en ce qu'**il comporte un dispositif de détection selon l'une des revendications précédentes.

15. Dispositif selon la revendication 14, **caractérisé en ce qu'**il comporte un mécanisme de positionnement (12) mobile, commandé, comportant un bras de positionnement (2) dudit pion apte à s'engager dans un espace laissé libre au voisinage dudit support

16. Dispositif selon la revendication 15, **caractérisé en ce que** ledit bras de positionnement dudit pion comporte un arbre rotatif (3) commandé à l'extrémité duquel un pion de centrage et d'entraînement est susceptible d'être monté.

17. Dispositif selon la revendication 16, **caractérisé en ce que** ledit mécanisme de positionnement (12) est muni de moyens de déplacement dudit bras de positionnement selon trois axes orthogonaux.

## Patentansprüche

1. Vorrichtung zur automatischen Feststellung von Charakteristiken eines ophthalmischen Glases, umfassend einen Träger (103), der dazu vorgesehen ist, ein solches Glas aufzunehmen, und beiderseits dieses Trägers einerseits Beleuchtungsmittel (108), die ein optisches System einschließen, um einen Lichtstrahl auszuarbeiten, der zu eine auf dem Träger installierten Glas gerichtet ist, und andererseits Mittel (110) zur Analyse des von dem auf dem Träger installierten Glas übertragenen Bildes, **dadurch gekennzeichnet, dass** das optische System dazu vorgesehen ist, zwei umschaltbare, zum Glas gerichtete, mögliche optische Bahnen (112, 113) für den Lichtstrahl zu definieren, und dass eine Maske (120), die eine Hartmann-Matrix bildet, auf nur einer der Bahnen an einer derartigen Stelle angeordnet ist, dass sie eine vorbestimmte Position in Bezug zu einer optischen Achse (125) der Analysemittel einnimmt.

2. Vorrichtung nach Anspruch 1, **dadurch gekennzeichnet, dass** die zwei optischen Bahnen (112, 113) einen gemeinsamen Teil stromaufwärts zu dem Träger umfassen.

3. Vorrichtung nach Anspruch 1 oder 2, **dadurch gekennzeichnet, dass** die Beleuchtungsmittel mindestens zwei umschaltbare Lichtquellen (S1, S2) umfassen, die jeweils den beiden vorgenannten optischen Bahnen entsprechen.

4. Vorrichtung nach Anspruch 3, **dadurch gekennzeichnet, dass** eine erste Lichtquelle (S1) von den zwei Quellen eine so genannte punktuelle Quelle ist, die mindestens einer Linse zugeordnet ist, die geeignet ist, von dieser einen parallelen Strahl zu liefern, der die Maske beleuchtet.

5. Vorrichtung nach Anspruch 3 oder 4, **dadurch gekennzeichnet, dass** eine zweite Lichtquelle (S2) von den zwei Quellen dazu vorgesehen ist, das auf dem Träger installierte Glas über einen Teil des optischen Systems ausschließlich der Maske zu beleuchten.

6. Vorrichtung nach einem der Ansprüche 2 bis 4, **dadurch gekennzeichnet, dass** die zweite Lichtquelle (S2) einem halb-reflektierenden Spiegel (118) zugeordnet ist, der den Schnittpunkt der zwei vorgenannten optischen Bahnen bildet, wobei der Spiegel zwischen der Maske und dem Träger zwischengefügt ist.

7. Vorrichtung nach Anspruch 5 oder 6, **dadurch gekennzeichnet, dass** die zweite Quelle (S2) eine so genannte punktuelle Quelle ist, die der mindestens einen Linse zugeordnet ist, die geeignet ist, von dieser einen zu dem Spiegel (118) gerichteten parallelen Strahl zu liefern.

8. Vorrichtung nach einem der Ansprüche 6 oder 7, **dadurch gekennzeichnet, dass** ein Expander (140, 141) zwischen dem Spiegel und dem Träger zwischengefügt ist.

9. Vorrichtung nach einem der Ansprüche 3 bis 8, **dadurch gekennzeichnet, dass** sie mindestens eine dritte Lichtquelle (S31, S3n) umfasst, die an der Peripherie des Trägers (103) angeordnet ist, um ein auf dem Träger angeordnetes Glas mit Streiflicht zu beleuchten.

10. Vorrichtung nach einem der vorhergehenden Ansprüche, **dadurch gekennzeichnet, dass** die Analysemittel einen matten durchscheinenden Bildschirm (129) umfassen, der senkrecht auf die optische Achse zwischen dem Träger (103) und einem optischen Empfänger (128) zwischengefügt ist.

11. Vorrichtung nach Anspruch 10, **dadurch gekennzeichnet, dass** der matte durchscheinende Bildschirm (129) drehbar montiert ist und um eine Achse parallel zur optischen Achse und von dieser entfernt in Drehung angetrieben wird.

12. Vorrichtung nach Anspruch 10, **dadurch gekennzeichnet, dass** der optische Empfänger (128) ein Matrixsensor oder eine Kamera ist.

13. Vorrichtung nach einem der vorhergehenden Ansprüche, **dadurch gekennzeichnet, dass** die Maske (120) stromaufwärts zu dem Träger (103) bei Betrachtung der Richtung der Bahn des Lichtstrahls angeordnet ist.

14. Vorrichtung zur automatischen Positionierung eines Zentrier- und Antriebsstücks (6) auf einem ophthalmischen Glas, **dadurch gekennzeichnet, dass** sie eine Feststellungsvorrichtung nach einem der vorhergehenden Ansprüche umfasst.

15. Vorrichtung nach Anspruch 14, **dadurch gekennzeichnet, dass** sie einen gesteuerten, beweglichen Positionierungsmechanismus (12) umfasst, umfassend einen Arm (2) zur Positionierung einzugreifen, der in der Nähe des Trägers frei gelassen ist.

16. Vorrichtung nach Anspruch 15, **dadurch gekennzeichnet, dass** der Arm zur Positionierung des Stücks eine gesteuerte drehbare Welle (3) umfasst, an deren Ende ein Zentrier- und Antriebsstück montiert werden kann.

17. Vorrichtung nach Anspruch 16, **dadurch gekennzeichnet, dass** der Positionierungsmechanismus (12) mit Mitteln zum Verschieben des Positionierungsarms entlang dreier orthogonaler Achsen versehen ist.

## Claims

1. Device for automatically detecting characteristics of an ophthalmic lens, said device including a support (103) conformed for receiving an ophthalmic lens and, on respective opposite sides of said support, firstly, illumination means (108) including an optical system for generating a light beam directed toward a lens installed on said support and, secondly, analysis means (110) for analyzing the image transmitted by said lens installed on said support, which device is **characterized in that** said optical system is adapted to define two switchable optical paths (112, 113) directed toward the lens for said light beam and **in that** a mask (120) forming a Hartmann matrix is placed on only one of the paths, at a location such that it occupies a predetermined position relative to an optical axis (125) of said analysis means.

2. Device according to Claim 1, **characterized in that** the two optical paths (112, 113) have a common portion upstream of said support.

3. Device according to Claim 1 or Claim 2, **characterized in that** said illumination means include at least two switchable light sources (S1, S2) respectively corresponding to the two optical paths previously cited.

4. Device according to Claim 3, **characterized in that**, of said two light sources, a first light source (S1) is a point source associated with at least one lens adapted to produce a parallel beam illuminating said mask.

5. Device according to Claim 3 or Claim 4, **characterized in that**, of said two light sources, a second light source (S2) is adapted to illuminate said lens installed on said support via a portion of said optical system excluding said mask.

6. Device according to one of Claims 2 to 4, **characterized in that** said second light source (S2) is associated with a semireflecting mirror (118) placed between said mask and support and materializing the intersection of the two optical paths previously cited.

7. Device according to Claim 5 or Claim 6, **characterized in that** said second source (S2) is a point source associated with at least one lens adapted to produce a parallel beam directed toward said mirror (118).

8. Device according to either of Claims 6 and 7, **characterized in that** an expander (140, 141) is placed between said mirror and said support.

9. Device according to one of Claims 3 to 8, **characterized in that** it includes at least one third light source (S31, S3n) disposed at the periphery of said support (103) to illuminate a lens placed on said support at grazing incidence.

10. Device according to one of the preceding claims, **characterized in that** said analysis means include a frosted translucent screen (129) perpendicular to said optical axis disposed between said support (103) and an optical receiver (128).

11. Device according to Claim 10, **characterized in that** said frosted translucent screen (129) is mounted so that it can turn and is adapted to be driven in rotation about an axis parallel to said optical axis and spaced therefrom.

12. Device according to Claim 10, **characterized in that** said optical receiver (128) is a matrix sensor or a video camera.

13. Device according to one of the preceding claims, **characterized in that** said mask (120) is upstream of said support (103) with respect to the direction of the path of the light beam.

14. Device for automatically positioning a centering and driving pin (6) on an ophthalmic lens, which device is **characterized in that** it includes a detector device according to one of the preceding claims.

15. Device according to Claim 14, **characterized in that** it includes a controlled mobile positioning mechanism (12) including an arm (2) for positioning said pin adapted to enter a free space in the vicinity of said support.

16. Device according to Claim 15, **characterized in that** said pin positioning arm includes a controlled rotary shaft (3) at the end of which a centering and driving pin can be mounted.

17. Device according to Claim 16, **characterized in that** said positioning mechanism (12) is provided with means for moving said positioning arm along three orthogonal axes.
